# EUROPÄISCHE PATENTSCHRIFT

(11) **EP 1 198 487 B1**
(45) Veröffentlichungstag und Bekanntmachung des Hinweises auf die Patenterteilung: **21.12.2005**
(21) Anmeldenummer: 00945777.1
(22) Anmeldetag: 20.06.2000
(51) Int. Cl.: C08G 18/08, C08G 18/12, C08G 18/66, C08G 18/48, C09D 175/04

(54) **POLYURETHAN-DISPERSIONEN**
POLYURETHANE DISPERSIONS
DISPERSIONS POLYURETHANE

(30) Priorität: 05.07.1999 DE 19930961
(43) Veröffentlichungstag der Anmeldung: 24.04.2002
(73) Patentinhaber: Bayer MaterialScience AG, 51368 Leverkusen (DE)
(72) Erfinder: IRLE, Christoph, D-41539 Dormagen (DE); KREMER, Wolfgang, D-47647 Kerken (DE); RUF, Günther, D-47809 Krefeld (DE); ROSCHU, Rolf, D-47877 Willich (DE)
(86) Internationale Anmeldenummer: PCT/EP2000/005649
(87) Internationale Veröffentlichungsnummer: WO 2001/002455

(56) Entgegenhaltungen:
- EP-A- 0 640 632
- EP-A- 0 709 414
- US-A- 5 500 475
- DATABASE WPI Section Ch, Week 199534 Derwent Publications Ltd., London, GB; Class A25, AN 1995-261323 XP002151723 & JP 07 165855 A (DAINIPPON INK & CHEM INC), 27. Juni 1995 (1995-06-27)

## Beschreibung

Die Erfindung betrifft Bindemittel für wäßrige Beschichtungen. Verfahren zu deren Herstellung und ihre Anwendung für Lacke und Beschichtungen.

Mit dem Ziel, die Emissionen organischer Lösemittel zu senken, werden zunehmend wäßrige Beschichtungsmittel an Stelle lösemittelhaltiger Systeme eingesetzt. Eine wichtige Klasse wäßriger Lackbindemittel sind die Polyurethan-Dispersionen. Einen Überblick gibt D. Dieterich, Prog. Org. Coatings **9**, 281 (1981). Polyurethan-Dispersionen vereinen die wichtigen Eigenschaften der Beständigkeit gegenüber Chemikalien und mechanischer Belastung. Speziell im Bereich der Beschichtung mechanisch stark beanspruchter Flächen ist die Verwendung von Polyurethan-Dispersionen daher von Vorteil.

Von besonderem Interesse ist die Beständigkeit gegenüber Beschädigungen, die durch Schuhabsätze auf Fußbodenbeschichtungen erzeugt werden (Absatzstrichbeständigkeit). Solche Absatzstriche führen besonders bei Beschichtungen mit ausgeprägter Thermoplastizität zu dauerhafter Beschädigung. Eine Verbesserung der Beständigkeit gegen solche Beschädigungen kann durch eine Vernetzung der Bodenbeschichtung erzielt werden.

Eine Weg zu einer solchen Verbesserung des Eigenschaftsprofils ist die Verwendung hydrophilierter Polyisocyanate, wie sie z. B. in der EP-B-0 540 985 beschrieben sind. Wäßrige 2K-Polyurethanlacke erreichen ein sehr hohes Eigenschaftsniveau. Wegen des vergleichsweise aufwendigen Applikationsverfahrens zweikomponentig zu verarbeitender Beschichtungssysteme ist ihr Einsatzgebiet, besonders bei handwerklicher Verarbeitung, aber begrenzt.

Ein einfacher, bereits beschriebener Weg zu vernetzten Beschichtungen aus Polyurethan-Dispersionen ist der Einbau ungesättigter Einheiten in das Bindemittel (Advances in Urethane Science and Technology, K.C. Frisch, D. Klempner (Hrsg.) Bd. 10, S. 121 - 162 (1987)). Beschichtungen aus solchen Bindemitteln vemetzen durch Reaktion mit Luftsauerstoff (autoxidative Vernetzung). Im Vergleich zur Kombination einer Polyurethan-Dispersion mit einem hydrophilierten Polyisocyanat ist insbesondere die Applikation dieser einkomponentig zu verarbeitenden Bindemittel vereinfacht.

Solche Urethangruppen und lufttrocknende Bausteine enthaltende Dispersionen sind weiterhin beschrieben in EP-A-0 017 199, EP-B-0 379 007, WO97/19120, DE-A-4 004 651, DE-A-4 416 336, US-A-5 039 732 und JP-A-6 340 842. Nachteilig an den bislang bekannten, autoxidativ vernetzbaren Polyurethan-Dispersionen ist jedoch, daß die mechanischen Eigenschaften des Lackfilms nicht das hohe Niveau der rein physikalisch trocknenden Polyurethan-Dispersionen erreichen. Dies zeigt sich z. B. in einer verschlechterten Abriebbeständigkeit.

Ein weiteres mögliches Verfahren zur Herstellung ungesättigte Einheiten enthaltender Polyurethan-Dispersionen wird in der EP-A-0 709 414 beschrieben. Durch Verwendung von dehydratisiertem Ricinusöl als OH-Komponente bei der Herstellung einer Polyurethan-Dispersion werden Produkte mit definiertem Gehalt an C=C-Doppelbindungen erhalten.

Bei der Dehydratisierung von Ricinusöl (siehe z. B. K. T. Achaya, J. Am. Oil Chem. Soc. 48, S. 758 [1971].) wird durch Abspaltung je eines Moleküls Wasser jeweils eine C=C-Doppelbindung erzeugt. Somit ist das in EP-A-0 709 414 beschriebene Verfahren dahingehend limitiert, daß aus Ricinusöl mit einem bestimmten Gehalt an OH-Gruppen und Doppelbindungen durch Dehydratisierung Produkte mit immer derselben Summe an Hydroxylgruppen und Doppelbindungen erhalten werden. So ist es nach diesem Verfahren z. B. nicht möglich, Produkte mit hohem Gehalt an Doppelbindungen und gleichzeitig hohem Gehalt an OH-Gruppen herzustellen.

Aufgabe der vorliegenden Erfindung war, auf einfachem Weg zugängliche Polyurethan-Dispersionen bereitzustellen, die zu Beschichtungen mit hervorragender Absatzstrichbeständigkeit mit gleichzeitig hervorragender Abriebbeständigkeit verarbeitet werden können

Erfindungsgemäß wird diese Aufgabe durch Polyurethan-Dispersionen gelöst, bei welchen die Polyurethane bestimmte, ungesättigte Polyester-Oligomere enthalten und nach einem einfachen Herstellverfahren durch Umesterung aus Ricinusöl zugänglich sind. Die Dispersionen können zu besonders hochwertigen Bodenbeschichtungen verarbeitet werden. Neben einer hohen Beständigkeit gegen Wasser/Ethanolgemische und Abrieb zeichnen sich diese durch eine Absatzstrichbeständigkeit aus.

Gegenstand der vorliegenden Erfindung sind Polyurethan-Dispersionen, dadurch gekennzeichnet, daß als eine der Aufbaukomponenten 5 bis 50 % eines Polyester-Oligomers (A) wie in Anspruch 1 definiert eingesetzt wird.

Die weiteren Bestandteile, die zum Aufbau der erfindungsgemäßen PUR-Dispersionen benötigt werden sind bekannt und in der Literatur häufig beschrieben. Es handelt sich dabei um
B) 5 - 60 % Polyisocyanate,
C) 0,5 - 40 % polymere Polyole mit mittleren Molgewichten von 500 bis 6000,
D) 0 - 10 % Monoalkohole und/oder Monoamine,
E) 0,5 - 15 % Polyole, Aminopolyole und/oder Polyamine mit einem Molgewicht unter 500, wobei bevorzugt eines dieser Polyole bzw. Polyamine eine ionische Gruppe enthält oder zur Ausbildung einer ionischen Gruppe, die kationisch oder anionisch sein kann, befähigt sein sollte und
F) 0 - 10 % OH- und/oder NH-funktionelle nichtionisch hydrophile Polyoxyalkylenether,
wobei sich die Prozentangaben auf das Gewicht beziehen und zu 100 % addieren.

Geeignete Polyisocyanate (B) sind bevorzugt Diisocyanate der Formel R¹(NCO)₂, wobei R¹ einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocxyanate sind Tetramethylendiisocyanat, Hexamethylendiisocyanat, 4,4-Diisocyanato-diphenylmethan, 2,4'-Diisocyanato-diphenylmethan, 2,4-Diisocyanatotoluol, 2,6-Diisocyanatotoluol oder α,α,α,'α,'-Tetramethyl-*m*- oder *p*-xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanato-dicyclohexylmethan.

Weiterhin sind als Polyisocyanate (B) solche Polyisocyanate geeignet, die über Isocyanurat-, Biuret-, Allophanat-, Uretdion- oder Carbodiimidgruppen verfügen. Derartige Polyisocyanate können hohe Funktionalitäten, z. B. von mehr als 3, aufweisen. Weitere für die Herstellung der erfindungsgemäßen Polyurethan-Dispersionen geeignete Polyisocyanate sind solche, die über nichtionisch oder ionisch hydrophile Aufbaukomponenten verfügen und üblicherweise als Vemetzer in wäßrigen 2K-PUR-Lacken eingesetzt werden.

Die polymeren Polyole (C) in dem Molgewichtsbereich von 500 - 6000 sind die üblicherweise zur Herstellung von Polyurethanen bereits seit langem eingesetzten. Sie weisen eine OH-Funktionalität von mindestens 1,8 bis ca. 4 auf. Es handelt sich zum Beispiel um Polyester, Polyether, Polycarbonate, Polyestercarbonate, Polyacetale, Polyolefine, Polyacrylate und Polysiloxane. Bevorzugt verwendet werden die genannten Polyole in einem Molgewichtsbereich von 800 bis 2500 mit einer OH-Funktionalität von 1,9 bis 3. Besonders bevorzugt werden Polyether eingesetzt.

Neben dem Einsatz difunktioneller OH-Komponenten kommt, wie aus der Literatur bekannt, auch die Terminierung des Polyurethan-Präpolymers mit einem monofunktionellen Alkohol oder Amin (D) in Betracht. Bevorzugte Verbindungen (D) sind aliphatische Monoalkohole oder Monoamine mit 1 - 18 C-Atomen, besonders bevorzugt werden Ethanol, n-Butanol, Ethylenglykol-monobutylether, 2-Ethylhexanol, 1-Octanol, 1-Dodecanol, 1-Hexadecanol oder Di-N-alkylamine eingesetzt Polyole, Aminopolyole oder Polyamine (E) mit einem Molgewicht unter 500, die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, 1,4-Butandiol, Cyclohexandimethanol, Trimethylolpropan, Glycerin sowie Hydrazin, Ethylendiamin, 1,4-Diaminobutan, Isophorondiamin und 4,4-Diaminodicyclohexylmethan.

Niedermolekulare Verbindungen gemäß (E), die anionische Gruppen enthalten oder zur Ausbildung einer ionischen Gruppe befähigt sind, sind z. B. Dimethylolpropionsäure, Hydroxypivalinsäure, Umsetzungsprodukte von (Meth)acrylsäure und Polyaminen (siehe z. B. DE-A-19 750 186) oder Sulfonatgruppen enthaltende Polyolkomponenten wie z. B. das propoxylierte Addukt von Natriumhydrogensulfit an 2-Butendiol oder die in WO98/06768 beschriebenen, aus Salzen der Sulfoisophthalsäure aufgebauten Polyester. Weiterhin geeignet sind OH-funktionelle Verbindungen, die kationische Gruppen oder in kationische Gruppen überführbare Einheiten enthalten wie z. B. N-Methyl-diethanolamin.

Weiterhin können die erfindungsgemäßen Polyurethan-Dispersionen Polyoxyalkylenether (F) enthalten, die pro Molekül mindestens eine Hydroxy- oder Aminogruppe tragen und z. B. aus einem Alkohol und aus Polyethylenoxid-/ Polypropylenoxidblöcken mit einem Molgewicht von 250 bis etwa 3000 bestehen. Bei ausreichendem Anteil dieser nichtionisch hydrophilen Verbindungen ist es auch möglich, auf die Verwendung ionisch hydrophiler Verbindungen gemäß (E) zu verzichten.

Gegenstand der vorliegenden Erfindung ist weiterhin ein Verfahren zur Herstellung von Polyurethan-Dispersionen, dadurch gekennzeichnet, dass zunächst durch Umesterung ein Polyester-Oligomer aus Ricinusöl und einem Triglycerid mit einer Jodzahl > 50, hergestellt wird und anschließend aus diesem Vorprodukt eine Polyurethan-Dispersion bereitet wird.

Das erfindungsgemäße Verfahren zur Herstellung des Polyester-Oligomeren (A) wird so durchgeführt, dass die Ausgangsstoffe, bevorzugt in Gegenwart eines Katalysators, auf hohe Temperaturen von z. B. 200 - 250 °C erhitzt werden. Der Verlauf der Umesterungsreaktion kann z. B. gelchromatographisch verfolgt werden. Als Katalysator kommen die in der Literatur (H. Zimmermann, Faserforsch. Textiltech. 13, S.481 [1962].) beschriebenen basischen oder sauren Katalysatoren, z. B. Natriumhydroxid, Lithiumhydroxid, Bleioxid, Lithiumacetat, Titan-, Zirkon-, Zink- und Zinnorganische Verbindungen in Frage. Bevorzugt werden basische Katalysatoren wie Alkalimetallhydroxide eingesetzt.

Bevorzugt wird das Polyester-Oligomer durch Umesterung aus Ricinusöl und Sojaöl hergestellt.

Die Herstellung der wäßrigen PUR-Dispersionen erfolgt in der bekannten üblichen Art: Man läßt die Polyisocyanatkomponente mit polymerem Polyol und niedermolekularen Kettenverlängerern zu einem Polyurethan ausreagieren, wobei ggf. und vorteilhaft ein Lösungsmittel mitverwendet wird, das später ggf. wieder abgetrennt werden kann.

Als Lösemittel geeignet sind die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvess® (Exxon), Cypar® (Shell), Cyclo Sol® (Shell), Tolu Sol® (Shell), Shellsol® (Shell) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethytether, Diethylenglykolethyl- und -butyletheracetat, N-Methylpyrrolidon und N-Methylcaprolactam, oder beliebige Gemische solcher Lösemittel.

In einem weiteren Schritt werden zur Neutralisation befähigte Gruppen durch Neutralisation in die Salzform überführt und mit Wasser die Dispersion erzeugt. Je nach Neutralisationsgrad kann die Dispersion sehr feinteilig eingestellt werden, so daß sie praktisch das Aussehen einer Lösung hat, aber auch sehr grobteilige Einstellungen sind möglich, die ebenfalls ausreichend stabil sind. Auch der Feststoffgehalt kann in weiten Grenzen von z. B. 20 - 50 % variiert werden.

Überschüssige Isocyanatgruppen werden dann durch Umsetzung mit polyfunktionellen isocyanatreaktiven Verbindungen zur Reaktion gebracht (Kettenverlängerung). Hierzu werden bevorzugt Wasser oder Polyamine, besonders bevorzugt Di- sowie Triamine und Hydrazin eingesetzt. Auch die Terminierung mit einem Monoamin wie z. B. Diethylamin, Dibutylamin, Ethanolamin, N-Methylethanolamin oder N,N-Diethanolamin ist möglich.

Zur Anwendung werden die erfindungsgemäßen Polyurethan-Dispersionen entweder allein oder in Kombination mit anderen wäßrigen Bindemitteln eingesetzt. Solche wäßrigen Bindemittel können z. B. aus Polyester-, Polyacrylat, Polyepoxid- oder Polyurethanpolymeren aufgebaut sein. Auch die Kombination mit strahlenhärtbaren Bindemitteln, wie sie z. B. in der EP-A-0 753 531 beschrieben sind, ist möglich und eine bevorzugte Verwendung der erfindungsgemäßen Polyurethan-Dispersionen. Weiterhin ist es möglich, die erfindungsgemäßen Polyurethan-Dispersionen durch Polyacrylate zu modifizieren. Hierzu wird in Gegenwart der Polyurethan-Dispersion eine Emulsionspolymerisation von olefinisch ungesättigten Monomeren wie Estern und/ oder Amide aus (Meth)acrylsäure und Alkoholen mit 1 - 18 C-Atomen, Styrol, Vinylestern oder Butadien durchgeführt, wie es zum Beispiel in DE-A-1 953 348, EP-A-0 167 188, EP-A-0 189 945 und EP-A-0 308 115 beschrieben ist. Die Monomere können funktionelle Gruppen wie Hydroxyl- oder Acetoacetoxygruppen sowie eine oder mehrere olefinische Doppelbindungen enthalten.

Weiterhin ist es möglich, vor Applikation Vernetzer zuzusetzen. Hierfür geeignet sind bevorzugt hydrophile und hydrophobe Polyisocyanatvernetzer.

Die erfindungsgemäßen Polyurethan-Dispersionen werden bevorzugt als Bindemittel in Beschichtungen und Klebstoffen verwendet. Beschichtungen auf Basis der erfindungsgemäßen Polyurethan-Dispersionen können auf beliebige Substrate aufgebracht werden, z. B. Holz, Metall, Kunststoff, Papier, Leder, Textilien, Filz, Glas oder mineralische Untergründe. Eine besonders bevorzugte Anwendung ist die Beschichtung von Holz-, Kork- und Kunststoffböden sowie mineralischen Böden.

Die Polyurethan-Dispersionen können als solche oder in Kombination mit den aus der Lacktechnologie bekannten Hilfs- und Zusatzmitteln wie z. B. Füllstoffen, Pigmenten, Lösungsmitteln, Verlaufshilfsmitteln zur Herstellung von Beschichtungen verwendet werden. Zur Beschleunigung der oxidativen Vernetzung können Sikkative zugesetzt werden.

Der Auftrag der Beschichtungsmaterialien kann auf bekannte Weisen, z. B. durch Streichen, Gießen, Rakeln, Spritzen, Walzen oder Tauchen erfolgen. Die Trocknung des Lackfilms kann bei Raumtemperatur oder erhöhter Temperatur, aber auch durch Einbrennen bei bis zu 200 °C erfolgen.

### Beispiele

### Polyester-Oligomer-Vorstufe 1

In einem 51-Reaktor mit Destillationsaufsatz werden 3200 g Ricinusöl und 1600 g Sojaöl sowie 2,4 g Dibutylzinnoxid eingewogen. Ein Stickstoffstrom (5l/ h) wird durch die Reaktanden geleitet. Innerhalb von 140 min wird auf 240 °C aufgeheizt. Nach 7 h bei 240 °C wird abgekühlt. Die OH-Zahl beträgt 89 mg KOH/ g, die Säurezahl 2,5 mg KOH/ g.

### Polyester-Oligomer-Vorstufe 2

In einem 51-Reaktor mit Rückflußkühler werden 3200 g Ricinusöl und 1600 g Sojaöl sowie 2,4 g Lithiumhydroxid eingewogen. Ein Stickstoffstrom (51/ h) wird durch die Reaktanden geleitet. Innerhalb von 140 min wird auf 240 °C aufgeheizt. Nach 4 h bei 240 °C wird abgekühlt. Die OH-Zahl beträgt 109 mg KOH /g, die Säurezahl 3,2 mg KOH /g.

### Polyester-Oligomer-Vorstufe 3 (nicht erfindungsgemäß)

In einem 51-Reaktor mit Destillationskolonne werden 90 g Glycerin, 813 g Edenor UKD 50 20 (konjugierte Fettsäure, Cognis), 1650 g Ricinusöl und 12,5 g Dibutylzinnoxid eingewogen. Ein Stickstoffstrom (5l/ h) wird durch die Reaktanden geleitet. Innerhalb von 12 h wird auf 200 °C aufgeheizt. Nach 6 h bei 200 °C wird abgekühlt. Die OH-Zahl beträgt 104 mg KOH /g, die Säurezahl 6,4 mg KOH /g.

### Polyurethan (PUR) - Dispersion 1

158 g Poly(tetrahydrofuran), MG 2000, 116 g der Polyester-Oligomer-Vorstufe 1, 1,26 g Dimethylolpropionsäure, 22 g Hexandiol 1,6 und 163 g N-Methylpyrrolidon werden auf 70 °C aufgeheizt und gerührt, bis eine klare Lösung entstanden ist. Dann werden 121 g Desmodur® W (Bayer AG) und 102 g Desmodur® I (Bayer AG) zugegeben und auf 100 °C aufgeheizt. Bei dieser Temperatur wird gerührt, bis der NCO-Gehalt 4,3 % beträgt. Dann wird auf 70 °C abgekühlt und 19,3 g Triethylamin zugegeben. 600 g dieser Lösung werden unter heftigem Rühren in 538 g Wasser, das bei einer Temperatur von 40 °C vorgelegt wird, dispergiert. Die Temperatur in der Dispersion wird durch Kühlung mit einem Eis/ Wasserbad bei 40 °C konstant gehalten. Nach Dispergierung wird auf 30 °C abgekühlt. Anschließend wird innerhalb von 5 min eine Lösung von 5,3 g Hydrazinhydrat und 10,1 g Ethylendiamin in 179 g Wasser zugegeben. Zur vollständigen Abreaktion der Isocyanatgruppen wird auf 65 °C aufgeheizt, bis IR-spektroskopisch kein NCO mehr nachweisbar ist. Nach Abkühlen auf 30 °C wird durch ein Seitz T5500-Filter filtriert.

### Kenndaten der Polyurethan-Dispersion:

| | |
|---|---|
| Mittlere Teilchengröße | 57 nm |
| (Laserkorrelationsspektroskopie, LKS) pH | 8,3 |
| Festgehalt | 35,5 % |

### PUR-Dispersion 2

339 g Poly(tetrahydrofuran), MG 2000, 248 g der Polyester-Oligomer-Vorstufe 2, 70 g Dimethylolpropionsäure, 34g Hexandiol 1,6 und 321 g N-Methylpyrrolidon werden auf 70 °C aufgeheizt und gerührt, bis eine klare Lösung entstanden ist. Dann werden 516 g Desmodur® W (Bayer AG) zugegeben und auf 100 °C aufgeheizt. Bei dieser Temperatur wird gerührt, bis der NCO-Gehalt 4,1 % beträgt. Dann wird auf 70 °C abgekühlt und 52,6 g Triethylamin zugegeben. 650 g dieser Lösung werden unter heftigem Rühren in 601 g Wasser, das bei einer Temperatur von 30 °C vorgelegt wird, dispergiert. Nach Dispergierung 5 min nachgerührt. Dann wird innerhalb von 5 min eine Lösung von 3,9 g Hydrazinhydrat und 10,2 g Ethylendiamin in 200 g Wasser zugegeben. Zur vollständigen Abreaktion der Isocyanatgruppen wird bei 45 °C gerührt, bis IR-spektroskopisch kein NCO mehr nachweisbar ist. Nach Abkühlen auf 30 °C wird durch ein Seitz T5500-Filter filtriert.

### Kenndaten der Polyurethan-Dispersion:

| | |
|---|---|
| Mittlere Teilchengröße | 33 nm |
| (Laserkorrelationsspektroskopie, LKS) pH | 8,8 |
| Festgehalt | 36,0 % |

### PUR-Dispersion 3

158 g Desmophen® 2028 (Bayer AG), 115 g der Polyester-Oligomer-Vorstufe 1, 25 g Dimethylolpropionsäure, 22 g Hexandiol 1,6 und 163 g N-Methylpyrrolidon werden auf 70 °C aufgeheizt und gerührt, bis eine klare Lösung entstanden ist. Dann werden 120 g Desmodur® W (Bayer AG) und 102 g Desmodur® I (Bayer AG) zugegeben und auf 100 °C aufgeheizt. Bei dieser Temperatur wird gerührt, bis der NCO-Gehalt 4,4 % beträgt. Dann wird auf 70 °C abgekühlt und 19,3 g Triethylamin zugegeben. 600 g dieser Lösung werden unter heftigem Rühren in 539,3 g Wasser, das bei einer Temperatur von 40 °C vorgelegt wird, dispergiert. Die Temperatur in der Dispersion wird durch Kühlung mit einem Eis/ Wasserbad bei 40 °C konstant gehalten. Nach Dispergierung wird auf 30 °C abgekühlt. Anschließend wird innerhalb von 5 min eine Lösung von 17,6 g Ethylendiamin in 180 g Wasser zugegeben. Zur vollständigen Abreaktion der Isocyanatgruppen wird auf 65 °C aufgeheizt, bis IR-spektroskopisch kein NCO mehr nachweisbar ist. Nach Abkühlen auf 30 °C wird durch ein Seitz T5500-Filter filtriert.

### Kenndaten der Polyurethan-Dispersion:

| | |
|---|---|
| Mittlere Teilchengröße | 110 nm |
| (Laserkorrelationsspektroskopie, LKS) pH | 8,7 |
| Festgehalt | 35,9 % |

### PUR-Dispersion 4 (nicht erfindungsgemäß)

181 g Poly(tetrahydrofuran), MG 2000, 133 g der Polyester-Oligomer-Vorstufe 3, 37 g Dimethylolpropionsäure, 18 g Hexandiol 1,6 und 96 g N-Methylpyrrolidon werden auf 70 °C aufgeheizt und gerührt, bis eine klare Lösung entstanden ist. Dann werden 276 g Desmodur® W (Bayer AG) zugegeben und auf 80 °C aufgeheizt. Bei dieser Temperatur wird gerührt, bis der NCO-Gehalt 4,4 % beträgt. Dann wird auf 70 °C abgekühlt und 20 g Triethylamin zugegeben. 600 g dieser Lösung werden unter heftigem Rühren in 799 g Wasser, das bei einer Temperatur von 30 °C vorgelegt wird, dispergiert. Nach Dispergierung wird 5 min nachgerührt. Dann wird innerhalb von 5 min eine Lösung von 6,6 g Hydrazinhydrat und 10,6 g Ethylendiamin in 89 g Wasser zugegeben. Zur vollständigen Abreaktion der Isocyanatgruppen wird bei 45 °C gerührt, bis IR-spektroskopisch kein NCO mehr nachweisbar ist. Nach Abkühlen auf 30 °C wird durch ein Seitz T5500-Filter filtriert.

### Kenndaten der Polyurethan-Dispersion:

| | |
|---|---|
| Mittlere Teilchengröße | 77 nm |
| (Laserkorrelationsspektroskopie, LKS) pH | 8.3 |
| Festgehalt | 35,1 % |

### Vergleichsbeispiel 1: Polyurethan-Dispersion ohne oxidativ trocknende Bausteine

389 g eines Polyesters aus Adipinsäure, Hexandiol und Neopentylglykol (Hydroxylzahl 112 mg KOH/ g), 28 g Neopentylglykol, 39 g Dimethylolpropionsäure und 220 g N-Methylpyrrolidon werden auf 70 °C aufgeheizt und gerührt, bis sich eine klare Lösung gebildet hat. Nun wird eine Mischung aus 157 g Desmodur® W (Bayer AG) und 199 g Desmodur® I (Bayer AG) zugegeben. Es tritt eine exotherme Reaktion ein. Der Ansatz wird bei 100 °C so lange gehalten, bis der NCO-Gehalt 4,3 Gew.-% beträgt. Nun wird auf 50 °C abgekühlt und 30 g Triethylamin zugegeben und durch 10-minütiges Rühren homogenisiert. Dann werden 850,0 g der neutralisierten Harzlösung unter Rühren in 940 g 42 °C warmem Wasser unter Rühren dispergiert. Es wird noch weitere 5 min gerührt, dann wird eine Lösung von 9,2 g Ethylendiamin und 10,5 g Diethylentriamin in 104 g Wasser innerhalb von 20 min zugegeben. Zur vollständigen Abreaktion der Isocyanatgruppen wird bei 45 °C gerührt, bis IR-spektroskopisch kein NCO mehr nachweisbar ist. Nach Abkühlen auf 30 °C wird durch ein Seitz T5500-Filter filtriert.

### Kenndaten der Polyurethan-Dispersion:

| | |
|---|---|
| Mittlere Teilchengröße | 58 nm |
| (Laserkorrelationsspektroskopie, LKS) pH | 8,0 |
| Festkörpergehalt | 34,9 % |

### Prüfung als Parkettlack:

Formulierung von Klarlacken aus den Polyurethan-Dispersionen 1, 2 und 3 sowie Vergleichsbeispiel 1:

Zur Formulierung eines Klarlackes fügt man zu 100 Gew.-Teilen der Dispersionen jeweils folgende Rezepturbestandteile:

| | |
|---|---|
| Colöser | Butylglykol-Wasser 1:1 (10 Gew.-Teile) |
| Entschäumer | Tego Foamex® 805 (Tego Chemie), Lieferform (0,2 Gew.-Teile) |
| Netzmittel | Byk® 346, (Byk Chemie) Lieferform (0,5 Gew.-Teile) |
| Verdicker | Acrysol® RM8 (Rohm and Haas), 5%-ig in Wasser (1,0 Gew.-Teile) |

Zur Bestimmung der Filmhärte (Pendeldämpfung nach DIN 53 157) und der Abriebbeständigkeit (nach DIN 53754; Taber Abraser, CS 10 *l* 1kg / 1000 Umdr.) werden die Lacke mit einer Naßfilm-Schichtstärke von 200µm auf Glasplatten appliziert.
Zur Bestimmung der Beständigkeiten gegen Wasser und Ethanol (50 %-ige wäßrige Lösung) werden die Klarlacke in 3 Schichten (jeweils 100 g Lack/m²) auf Eichenholzplatten appliziert, anschließend wird jeweils bei Raumtemperatur getrocknet. Vor Applikation der 2. und 3. Schicht wird die Lackoberfläche leicht angeschliffen.

Beständigkeiten gegen Wasser und Ethanol bestimmt man nach folgender Methode: Mit dem Lösemittel getränkte Wattebäusche werden auf 7 Tage alte Lackfilme aufgelegt und mit Petrischalen abgedeckt. Nach Einwirkzeiten von 24 Stunden (Wasser) bzw. 30 Minuten (Ethanol) erfolgt die Beurteilung, nachdem die benetzten Filme mit Haushaltspapier vorsichtig getrocknet worden sind. Beurteilt werden Beschädigungen in einer Skala von 0 (keine Veränderung) bis 5 (starke Beschädigung, Film aufgelöst).

Die Beurteilung der Absatzstrichbeständigkeit erfolgt durch schlagartiges Verletzen der Filmoberfläche mit einer handelsüblichen Reparatur-Schuhsohle. Beurteilt wird die Erweichung des Lackfilmes bzw. die Absatzstrichbeständigkeit in einer Skala von 0 bis 4:

| Wert | Erweichung | Absatzstrichbeständigkeit |
|---|---|---|
| 0 | Unverändert | Unverändert |
| 1 | sehr schwach | leichte Spur erkannbar |
| 2 | etwas stärker | leichte Kratzer erkennbar |
| 3 | mit Fingernagel leicht zu beschädigen | Kratzer deutlich erkennbar |
| 4 | läßt sich wegwischen | Oberfläche eingebrannt |

### Prüfergebnisse:

| | PUR-Dispersion 1 | PUR-Dispersion 2 | PUR-Dispersion 3 | Vergleichsbeispiel 1 |
|---|---|---|---|---|
| Wasserbeständigkeit 24 h | 0 | 0 | 0 | 0 |
| Ethanol/ Wasser 5 min | 2 | 1 | 2 | 4 |
| Ethanol/ Wasser 30 min | 3 | 2 | 3 | 4 |
| Abrieb/ mg | 20 | 40 | 16 | 12 |
| Absatzstrichbeständigkeit | 1 | 2 | 1 | 4 |

Die Prüfergebnisse zeigen die deutliche Verbesserung der Absatzstrichbeständigkeit der erfindungsgemäßen PUR-Dispersionen 1, 2 und 3.

## Patentansprüche

1. Verfahren zur Herstellung von Polyurethan-Dispersionen, welche erhältlich sind aus
A) 5 - 50 % Polyester,
B) 5 - 60 % Polyisocyanaten,
C) 0,5 - 40 % polymeren Polyolen mit mittleren Molgewichten von 500 bis 6000,
D) 0 - 10 % Monoalkoholen und/oder Monoaminen
E) 0,5 - 15 % Polyolen, Aminopolyolen und/oder Polyaminen mit einem Molgewicht unter 500 und
F) 0 - 10 % OH- und/oder NH-funktionellen nichtionischen hydrophilen Polyoxyalkylenether
**dadurch gekennzeichnet, daß** die Komponente (A) ein Polyester-Oligomer ist, das durch Umesterung aus Ricinusöl und einem Triglycerid mit einer Iodzahl >50 hergestellt wird.

2. Polyurethan-Dispersion erhältlich gemäß Anspruch 1.

3. Polyurethan-Dispersion gemäß Ansprüchen 1 und 2, wobei die Polyisocyanatkomponente (B) aus 4,4'-Diisocyanato-dicyclohexylmethan und/oder Isophorodiisocyanat besteht.

4. Polyurethan-Dispersion gemäß Ansprüchen 1 bis 3, **dadurch gekennzeichnet, dass** die Polyolkomponente (C) ein Polyether ist.

5. Polyurethan-Dispersion gemäß Ansprüchen 1 bis 4, **dadurch gekennzeichnet, dass** ein oder mehrere Verbindungen der Komponente (E) eine ionische Gruppe enthält oder zur Ausbildung einer ionischen Gruppe befähigt ist.

6. Verwendung von Polyurethan-Dispersion gemäß Ansprüchen 2 bis 5 als Bindemittel in Beschichtungen und Klebstoffen.

7. Verwendung von Polyurethan-Dispersion gemäß Ansprüchen 2 bis 5 zur Beschichtung von Fußböden.

## Claims

1. Process for the production of polyurethane dispersions which are obtainable from
A) 5-50% of polyesters,
B) 5-60% of polyisocyanates,
C) 0.5-40% of polymeric polyols having average molar weights of 500 to 6000,
D) 0-10% of monoalcohols and/or monoamines,
E) 0.5-15% of polyols, aminopolyols and/or polyamines having a molar weight of below 500, and
F) 0-10% of OH- and/or NH-functional, non-ionic, hydrophilic polyoxyalkylene ethers,
**characterized in that** component (A) is a polyester oligomer produced by transesterification from castor oil and a triglyceride which has an iodine number >50.

2. Polyurethane dispersion obtainable according to Claim 1.

3. Polyurethane dispersion according to Claims 1 and 2, the polyisocyanate component (B) comprising 4,4'-diisocyanatodicyclohexylmethane and/or isophorone diisocyanate.

4. Polyurethane dispersion according to Claims 1 to 3, **characterized in that** the polyol component (C) is a polyether.

5. Polyurethane dispersion according to Claims 1 to 4, **characterized in that** one or more than one compound of component (E) contains an ionic group or is capable of forming an ionic group.

6. Use of polyurethane dispersion according to Claims 2 to 5 as binder in coatings and adhesives.

7. Use of polyurethane dispersion according to Claims 2 to 5 for coating floors.

## Revendications

1. Procédé pour la préparation de dispersions de polyuréthannes obtenues à partir de
A) 5 à 50 % de polyesters,
B) 5 à 60 % de polyisocyanates,
C) 0,5 à 40 % de polyols polymères, à un poids moléculaire moyen de 500 à 6000,
D) 0 à 10 % de monoalcools et/ou de monoamines,
E) 0,5 à 15 % de polyols, d'aminopolyols et/ou de polyamines à un poids moléculaire inférieur à 500 et
F) 0 à 10 % d'éthers polyoxyalkylénés non ioniques hydrophiles à fonctions OH et/ou NH,
**caractérisé en ce que** le composant A) consiste en un oligomère de polyester préparé par réaction de l'huile de ricin et d'un triglycéride d'indice d'iode supérieur à 50.

2. Dispersion de polyuréthanne obtenue selon la revendication 1.

3. Dispersion de polyuréthanne selon les revendications 1 et 2, pour laquelle le composant polyisocyanate (B) consiste en 4,4'-diisocyanatodicyclohexylméthane et/ou isophoronediisocyanate.

4. Dispersion de polyuréthanne selon les revendications 1 à 3, **caractérisée en ce que** le composant polyol (C) est un polyéther.

5. Dispersion de polyuréthanne selon les revendications 1 à 4, **caractérisée en ce que** un ou plusieurs composés du composant (E) contiennent un groupe ionique ou sont capables de former un groupe ionique.

6. Utilisation d'une dispersion de polyuréthanne selon les revendications 2 à 5 en tant que liants dans des revêtements et des adhésifs.

7. Utilisation d'une dispersion de polyuréthanne selon les revendications 2 à 5 pour le revêtement de sols.
